# EUROPÄISCHE PATENTSCHRIFT

(11) **EP 0 702 069 B1**
(45) Veröffentlichungstag und Bekanntmachung des Hinweises auf die Patenterteilung: **06.05.1999**
(21) Anmeldenummer: 95112850.3
(22) Anmeldetag: 16.08.1995
(51) Int. Cl.: C09J 7/02

(54) **Klebfolien-Streifen**
Adhesive foil tape
Ruban d'adhésif en feuille

(30) Priorität: 08.09.1994 DE 4431914
(43) Veröffentlichungstag der Anmeldung: 20.03.1996
(73) Patentinhaber: Beiersdorf Aktiengesellschaft, 20245 Hamburg (DE)
(72) Erfinder: Lühmann, Bernd, Dr., D-22846 Norderstedt (DE); Junghans, Andreas, D-20251 Hamburg (DE)

(56) Entgegenhaltungen:
- WO-A-92/11332
- WO-A-92/11333
- WO-A-95/06691
- DE-C- 4 222 849

## Beschreibung

Die Erfindung betrifft einen Streifen einer Klebfolie für eine rückstandsfrei wiederlösbare Verklebung.

Aus DE 33 31 016 C2 sind Klebfolien für wiederlösbare Klebbindungen bekannt, die es gestatten, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Reißverschlusses oder besser noch vergleichbar dem Öffnen eines Weckglases: die Gummidichtung wird am Anfasser aus der Dichtungsfuge gezogen. In der Praxis haben sich jedoch beträchtliche Nachteile bei der Verwendung solcher Klebfolien gezeigt. Zum einen handelt es sich um ein erklärungsbedürftiges Produkt. Derjenige, der bisher noch nicht eine solche Klebfolie verwendet hat, ist leicht geneigt, die Fügeteile so aufeinander zu kleben, daß die Klebfolie zwischen den Fügeteilen verschwindet, nicht mehr herausragt, und also kann man nicht mehr daran ziehen, eine irreversible Verklebung ist die Folge mit entsprechender Enttäuschung. Die Enttäuschung ist aber ebenso groß, wenn bei richtiger Anwendung dann beim Ziehen an der Klebfolie diese abreißt: auch hier ist eine irreversible Verklebung die Folge. Der Vorteil einer wiederlösbaren Klebbindung, die ohne Beschädigung der Fügeteile in einfachster Weise eben durch Ziehen erfolgen kann, wandelt sich in einen drastischen Nachteil, denn gerade die Fügeteile, die wieder getrennt werden sollten, sind nun dauerhaft verklebt. Es bleibt meist nur, die Fügeteile zu zerstören. Das Problem eines Abrisses beim Ziehen hatten auch die Erfinder der DE 33 31 016 C2 erkannt und diesem ihre besondere Aufmerksamkeit gewidmet. Auf Seite 4, Mitte, wird demgemäß ein bestimmtes Verhältnis von Abzugskraft zu Reißlast, die Reißlast soll stets größer als die Abzugskraft sein und aus Sicherheitsgründen soll sich die Abzugskraft zur Reißlast wie 1 : 2 bis 1 : 3 verhalten.

In der Praxis hat sich jedoch gezeigt, daß diese Vorsichtsmaßnahme oft nicht genügt. Eine Verklebung von Substraten auf einem Ausstellungsfreigelände, die nach Ende der Ausstellung wieder getrennt werden soll, ist aufgrund von Abrissen nicht mehr zu trennen. Ebenso etwa auf ein Fenster geklebte Kalender oder Advents-Dekorationen. Auch Poster oder Bilder, so an der Wand befestigt, werden zu irreversiblem Wandschmuck, sobald die Klebfolien beim Ziehen abgerissen ist. Der Schaden ist erheblich, der Kunde verloren. Und auch die Verwendung noch dickerer Klebfolien, wie DE 33 61 016 C2 dies empfiehlt, hilft nicht, solche Abrisse zu verhindern. Auch aus DE 37 14 453 C1 ist die Verwendung einer solchen Klebfolie bekannt, dort als Stripband bezeichnet, um Übungssprengkörper zerstörungsfrei von Übungsobjekten wieder abnehmen zu können. Man läßt auch hier eine Lasche 6 seitlich aus der Klebfuge hervorstehen, um an dieser zu ziehen und den Verbund so wieder zu lösen. Auch bei dieser Anwendung kommt es in der Praxis zu Abrissen.

Diesem Problem der Abrisse widmet sich DE 42 22 849 C1 und schlägt vor, am Ende der Klebfolie, an dem an zieht, eine UV-undurchlässige Abdeckung als Anfasser aufzubringen. Damit sollen durch UV-Strahlen ausgelöste Schädigungen der Klebfolie von vornherein vermieden werden, von den ausgehend ein Riß beim Ziehen entstehen und sich fortpflanzen kann. Dennoch kommt es auch bei diesen Klebfolien zu Abrissen. Ganz ebenso beschreibt DE 42 33 872 C2 einen wiederablösbaren, selbstklebenden Haken, der einen UV-undurchlässigen Anfasser an der Klebfolie aufweist. auch hier kommt es zu Abrissen.

WO 92/11333 beschreibt Klebfolien für entsprechende Anwendungen, die eine Trägerfolie von geringer Elastizität und zugleich hoher Dehnung enthalten. Bei derartigen Produkten stellt sich das Problem der Abrisse wegen der reißfesten Trägerfolie nicht, im Gegensatz zu den zuvor beschriebenen Produkten, die aus reiner Klebmasse ohne Trägerfolie bestehen.

Aufgabe der Erfindung war es, hier Abhilfe zu schaffen. Denn das Problem der Abrisse stellt für die Klebfolien aus reiner Klebmasse und ohne eine Trägerfolie ein zentrales Problem dar.

Gelöst wird dies durch Klebfolien-Streifen, wie sie in den Patentansprüchen näher gekennzeichnet sind.

Der prinzipielle Aufbau der erfindungsgemäßen Klebestreifen sowie anwendungstechnische Abmessungen sind ausführlich in DE 42 22 849 C1, DE 33 31 016 C2 und DE 42 33 872 C2 beschriebenen Klebemassen und Abdeckpapiere / -folien lassen sich gleichfalls für vorliegende erfindungsgemäße Klebfolienabschnitte einsetzen.

Die erfindungsgemäßen Klebfolienabschnitte werden insbesondere durch Aufkaschieren von Anfasserstreifen im Anfasserbereich nichtklebend eingestellt. Als Anfasserstreifen sind dabei vornehmlich solche auf Basis von dünnen Folien (Kunststoffolien, Metallfolien) und Papier geeignet, welche entweder per se eine ausreichend niedrige Adhäsion zur zum Einsatz kommenden Klebmassen aufweisen, üblicherweise jedoch durch Beschichtung mit einem entsprechenden Trennlack abhäsiv gegenüber entsprechender Klebmasse eingestellt sind. Prinzipiell geeignet sind neben Folien und Papieren ebenfalls abhäsiv wirkende Flächengebilde auf Basis von z.B. Vliesstoffen (Kunststoffvliese, Papiervliese) und Gewebe um nur einige zu nennen. Wesentlich für den erfolgreichen Einsatz sind ausreichend niedrige Trennkräfte gegenüber den verwendeten Klebmassen. Angestrebt werden Trennkräfte kleiner 3N/cm und insbesondere von kleiner 0,3N/cm. Insbesondere bei sehr niedrigen Trennkraftwerten wird gleichzeitig eine Reduzierung der Haft- und Gleitreibungsbeiwerte der so behandelten Folien gegenüber menschlicher Haut bewirkt, wodurch ein sicheres Festhalten der Anfasser beim Löseprozeß nicht in jedem Fall gewährleistet ist. Vorteilhafterweise werden daher einseitig trennlackierte Anfasserstreifen eingesetzt, wobei die abhäsive Seite dem Kleber zugewandt ist, die nicht abhäsive der dem Kleber abgewandten Seite.

Die Dicken der Anfasserstreifen sind überlicherweise derart ausgewählt, daß auch beim Hineinreichen selbiger in die Klebfuge eine möglichst vollflächige Verklebung der klebrigen Bereiche und damit eine maximale Verklebungsfestigkeit gewährleistet ist. Geeignet sind insbesondere Anfasserstreifen, welche in ihrer Dicke max. 20% der Gesamtdicke der sie abdeckenden Klebmasse, vornehmlich jedoch solche, welche in ihrer Dicke max. 10% der Gesamtdicke der sie abdeckenden Klebemasse entsprechen.

Zur Einstellung der gewünschten Trennkräfte der Anfasserstreifen zu den dem Kleber zugewandten Seiten können diese in üblicher Weise mit abhäsiv wirkenden Materialien beschichtet werden. Geeignete Trennkräfte ergeben u.a. Polymere mit langkettigen aliphatischen Seitenketten, wie z.B. Umsetzungsprodukte von Polyvinylalkohol mit Stearylisocyanat (Poly(vinylstearylcarbamat)), Umsetzungsprodukte von Polyethylenimin mit Stearylisocyanat oder Cr-Komplexe langkettiger Carbonsäuren (Quilon C; Fa. Costenoble) um nur einige zu nennen. Vornehmlich geeignet sind abhäsiv wirkende Silikone, insbesondere solche auf Basis vernetzter Polymethylsiloxane und vernetzter Polydimethylsiloxane, da diese insbesondere in Abmischung die Einstellung eines weiten Trennkraftbereiches sowie insbesondere sehr niedriger Trennkraftwerte von deutlich unterhalb 1 N/cm gegenüber den zum Einsatz kommenden Haftklebemassen ermöglichen. Erfindungsgemäß nutzbar sind hierbei sowohl additionshärtende Systeme, kondensationshärtende Systeme als auch durch Bestrahlung mit schnellen Elektronen oder UV-vernetzende Materialen.

### Testmethoden

Die Eignung entsprechender Anfasserstreifen läßt sich durch vergleichende Praxisverklebungen, wie nachfolgend beschrieben, ermitteln. Es konnte gezeigt werden, daß die Ergebnisse aus dem weiter unten beschriebenen "Reißtest" mit den Ergebnissen entsprechender Praxisverklebungen korrelieren.

### Prüfung auf Stripfähigkeit (Praxisverklebungen):

Getestet werden Klebfolienstücke der Abmessungen 50 mm * 20 mm 700 µm (Länge * Breite * Dicke), welche an einem Ende beidseitig einen Anfasser der Abmessungen 15 mm * 20 mm tragen. Die 24h unter Normalklima (T=+23°C, 50% rel. Feuchte) gelagerten Klebfolienstücke werden derart verklebt, daß in einem ersten Arbeitsschritt der Klebestreifen vollflächig auf eine Stahlplatte verklebt wird (durch zweifaches Überrollen mit einer 2 kg Stahlrolle), danach die Verklebung mit der anderen Seite des Klebfolienstückes mit einer weiteren Stahlplatte so erfolgt (5 sek. Andruck mit 100N), daß die Anfasserfolien ca. 1 - 2 mm in die Klebfuge hineinreichen. Probekörper werden 24 h bei +40°C im Umlufttrockenschrank gelagert, danach 2 h unter Normklima konditioniert.

Beurteilt wird die Anzahl der Klebfolienstücke, welche beim Lösen der Verklebung reißen. Zum Lösen der Verklebung werden die Klebestreifen von Hand am Anfasser parallel zur Verklebungsebene in Längsrichtung der Klebstreifen aus der Klebfuge herausgestript. Die Separationsgeschwindigkeit im Test beträgt ca. 250 mm/sec.

### Reißtest bei hoher Separationsgeschwindigkeit:

Getestet werden Klebfolienstücke der Abmessungen 50 mm * 20 mm * 700 µm (Länge * Breite * Höhe), welche an beiden Enden beidseitig einen Anfasser der Abmessungen 15 mm * 20 mm tragen. Klebfolienstücke werden in den Anfasserbereichen mit beiden Händen zwischen Daumen und Zeigefinger fest gehalten und so schnell auseinandergezogen, daß ein Zerreißen auftritt. Untersucht werden können Anfasser gleichen Aufbaus sowie im direkten Vergleich solche unterschiedlichen Aufbaus.

Beurteilt wird die Lage der Bruchstelle, welche in einem der Anfasserbereiche oder im anfasserfreien Mittenbereich liegen kann.

### Beispiele

Nachfolgend wird die Erfindung anhand von Ausführungsbeispielen beschrieben. Alle angegebenen Teile sind Gewichtsteile.

### Beispiel 1

eine Klebemasse bestehend aus 100 Teilen SIS-Kautschuk (Vector 4211; Fa. Dexco) 100 Tln. eine Pentaerythrithesters von teilhydriertem Kolophonium (Foralyn 110; Fa. Hercules) und 1 Tl. phenolischem Antioxidant (Irganox 1010; Fa. Ciba) wird mit Hilfe eines Einschneckenextruders, welcher mit einer Breitschlitzdüse ausgestattet ist, bei + 130°C in 700µm Dicke auf eine beidseitig mit einem Silikontrennlack beschichtete Folie aus Polyethylenterephthalat (PETP: Hostaphan RN 25) beschichtet. Der erhaltene Mutterballen wird anschließend zu 60 mm breiten Tochterrollen weiterverarbeitet. Die Reißfestigkeit der Klebemasse wird nach DIN 53504 zu größer 7 MPa ermittelt.

Für einen vergleichenden Praxistest werden ausgehend von den Tochterrollen Streifen der Abmessungen 60mm * 20mm ausgestanzt, welche an einem Ende beidseitig in der gesamten Breite mit den in nachfolgender Tabelle gelisteten Anfasserstreifen der Abmessungen 15mm * 20mm kaschiert werden:

| Nr. | Art Anfasserstreifen | Trennlack | Trägerdicke | Trennlackauftrag |
|---|---|---|---|---|
| 1] | PETP-Folie | ohne Trennlack | 12µm | ohne Trennlack |
| 2] | PETP-Folie | Silikontrennlack A | 12µm | 0.2 ± 0.05 g/m² |
| 3] | PETP-Folie | Silikontrennlack A | 25µm | 0.2 ± 0.05 g/m² |
| 4] | PETP-Folie | Silikontrennlack B | 25µm | 0.25 ± 0.05 g/m² |
| 5] | PETP-Folie | Silikontrennlack C | 25µm | 0.2 ± 0.05 g/m² |
| 6] | BOPP-Folie | Silikontrennlack A | 28µm | 0.2 ± 0.05 g/m² |
| 7] | CAC-Folie | PVSC | 36µm | 0,25 ± 0,05 g/m² |
| 8] | PE-Folie | Silikontrennlack | 100µm | 0,7 ± 0,01 g/m² |
| Legende | | | | |
| PETP-Folie 12µm = Hostaphan RN 12 (Fa.Hoechst) | | | | |
| PETP-Folie 25µm = Hostaphan RN 25 (Fa.Hoechst) | | | | |
| PP-Folie = Bicor 28 MB 250 (Fa. Mobil Plastics) | | | | |
| CAC-Folie = Clarifoil P20 (Fa. Courtaulds, Trennlack auf matte Folienseite) | | | | |
| PE-Folie = Q 16000 (Fa. Forchheim) | | | | |
| Silikontrennlack A = 95.4 Tle Syloff 7144 Coating + 2.3 Tle Syl-off Q2-7131 + 2.3 Tle Dow Corning 176 Catalyst (alle Fa. Dow Corning) | | | | |
| Silikontrennlack B = additionshärtendes Silikon | | | | |
| Silikontrennlack C = additionshärtendes Silikon | | | | |
| Silikontrennlack D = elektronenstrahlvernetztes Silikon: 70 Tle. RC 711 + 70 Tle RC 726 (beide Fa. Goldschmidt); ES-Dosos = 30 kGy | | | | |
| PVSC = Poly(vinylstearylcarbamat): mittlere Molmasse: ca 90.000 g/mol Erweichungspunkt: 92-107°C (Mettler FP-800) | | | | |

Für die in obiger Tabelle gelisteten Materialien wurden die Trennkräfte gegen die o.g. Klebmasse bestimmt und im ebenfalls o.g. Praxisverklebungstest die Anzahl der Reißer vergleichend ermittelt. Die erhaltenen Ergebnisse sind nachfolgend gelistet:

| Nr. | Trennkraft | % Reißer (Praxistest) |
|---|---|---|
| 1] | > 10 N/cm | 80 |
| 2] | 0.04 ± 0.01 N/cm | 0 |
| 3] | 0.04 ± 0.01 N/cm | 0 |
| 4] | 0.085 ± 0.015 N/cm | |
| 5] | 0.14 ± 0.02 N/cm | 10 |
| 6] | 0.04 ± 0.01 N/cm | 0 |
| 7] | 2,0 ± 1,0 N/cm | 30 |
| 8] | 0,04 ± 0,01 N/cm | 0 |
| 9] | ............ N/cm | .. |

Durch Einsatz der trennlackierten Folien wird eine drastische Reduzierung der Reißneigung erhalten.

### Beispiel 2

Entsprechend oben beschriebenem Reißtest wurden nachfolgende Klebfolienstücke untersucht:

| Nr. | Anfasser A | Anfasser B | Anzahl Reißer | | |
|---|---|---|---|---|---|
| | | | Anfasser A | Mittelbereich | Anfasser B |
| 1 | 25µm PETP ohne Trennlack | 25µm PETP ohne Trennlack | 5 | 0 | 5 |
| 2 | 25µm PETP ohne Trennlack | 12µm PETP ohne Trennlack | 5 | 0 | 5 |
| 3 | 25µm PETP ohne Trennlack | 25µm BOPP ohne Trennlack | 5 | 0 | 5 |
| 4 | 25µm PETP ohne Trennlack | 25µm PETP Silikonlack C | 9 | 0 | 1 |
| 5 | 25µm PETP ohne Trennlack | 25µm PETP Silikonlack B | 10 | 0 | 0 |
| 6 | 25µm PETP ohne Trennlack | 25µm PETP Silikonlack A | 10 | 0 | 0 |
| 7 | 25µm PETP Silikonlack C | 25µm PETP Silikonlack C | 5 | 0 | 5 |
| 8 | 25µm PETP Silikonlack C | 25µm PETP Silikonlack A | 10 | 0 | 0 |
| 9 | 25µm PETP Silikonlack A | 25µm PETP Silikonlack A | 2 | 2 | 2 |
| 10 | 36µm CAC PVCS | 25µm PETP ohne Trennlack | 2 | 0 | 8 |
| 11 | 36µm CAC PVCS | 25µm PETP Silikonlack A | 10 | 0 | 0 |
| Legende: siehe Legende zu Beispiel 1. | | | | | |

Nicht trennlackierte Anfasserstreifen weisen die gleiche Neigung auf im Anfasserbereich bei schneller Verstreckung zu reißen. Mit steigender Abhäsivität der Anfasserstreifen gegenüber der Klebemasse wird die Tendenz zum Reißen im Bereich des abhäsiver eingestellten Anfassers stark reduziert. Bei sehr niedrigen Trennkräften werden ebenfalls Reißer im Mittenbereich zwischen den beiden Anfassern beobachtet.

### Beispiel 3

Eine Klebmasse bestehend aus 50 Tln. SIS-Kautschuk (Vector 4211; Fa. Dexco), 50 Tln. SBS-Kautschuk (Vector 4261; Fa. Dexco), 100 Tln. eines Pentaerythrithesters von Balsamkolphonium (Permalyn 6110; Fa. Hercules), 0,5 Tln. phenolischem Antioxidant (Irganox 1076; Fa. Ciba) und 0,25 Tln. TNPP (Lownox TNPP; Fa. Lowi) wird analog Beispiel 1 zu einer 700µm starken Klebfolienstreifen der Abmessungen 60 mm * 20 mm verarbeitet, welche an einem Ende beidseitig in der gesamten Breite mit den in nachfolgend Tabelle gelisteten Anfasserfolien bzw. Anfasserpapieren der Abmessungen 15mm * 20 mm kaschiert werden:

| Nr. | Art Anfasserstreifen | Trägerdicke |
|---|---|---|
| 1] | PETP-Folie ohne Trennlack | 12µm |
| 2] | Trennpapier A | 70µm |
| 3] | Trennpapier B | 65µm |
| 4] | Trennpapier C | 65µm |
| Legende: | | |
| PETP-Folie 12µm = Hostaphan RN 12 (Fa.Hoechst) | | |
| Trennpapier A = KS 90052 B / 52B20 (Fa.Laufenberg) | | |
| Trennpapier B = HV 80-622/368 schwächer trennlackierte Seite (Fa. 4P-Rube) | | |
| Trennpapier C = HV 80-622/368 stärker trennlackierte Seite (Fa. 4P-Rube) | | |

Für die in obiger Tabelle gelisteten Materialien wurden die Trennkräfte gegen die o.g. Klebmasse bestimmt und im ebenfalls o.g. Praxisverklebungstest die Anzahl der Reißer vergleichend ermittelt. Die erhaltenen Ergebnisse sind nachfolgend gelistet:

| Nr. | Trennkraft | % Reißer (Praxistest) |
|---|---|---|
| 1] | > 10 N / cm | 80 |
| 2] | 0,5 ± 0,1 N / cm | 10 |
| 3] | 0,3 ± 0,1 N / cm | 0 |
| 4] | 0,1 ± 0,03 N / cm | 0 |

Durch Einsatz der trennlackierten Papiere wird entsprechend Beispiel 1 eine drastische Reduzierung der Reißneigung erhalten.

## Patentansprüche

1. Streifen einer Klebfolie für eine rückstandsfrei wiederlösbare Verklebung auf Basis von thermoplastischem Kautschuk und klebrigmachenden Harzen, wobei die Klebfolie hohe Elastizität und geringe Plastizität aufweist und wobei die Adhäsion geringer als die Kohäsion ist, das Haftvermögen beim Dehnen der Folie verschwindet, das Verhältnis von Abzugskraft zu Reißlast mindestens 1 : 1,5 ist, und wobei eine damit hergestellte Klebbindung durch Ziehen an der Klebfolie in Richtung der Verklebungsebene lösbar ist, wobei das eine Ende des Streifens beidseits mit einer Abdeckung versehen ist, die auf der der Klebfolie zugewandten Seite abhäsiv ist, und die zugleich als Anfasser zum Ziehen dient.

2. Streifen nach Anspruch 1, wobei die Abdeckung eine trennlackierte Folie oder ein trennlackiertes Papier ist.

3. Streifen nach Anspruch 1, wobei die Trennkraft der Abdeckfolie kleiner als 3 N/cm beträgt.

4. Streifen nach Anspruch 1, wobei die Abdeckung UV-undurchlässig ist.

5. Streifen nach Anspruch 1, worin die Masse selbstklebend eingestellt ist.

6. Streifen nach Anspruch 1, enthaltend in der Masse Antioxidantien. UV-Stabilisatoren, Farbstoffe, Füllstoffe und/oder andere übliche Hilfsmittel.

7. Streifen nach Anspruch 1, mit einer Dicke von 0,2 mm bis 1,2 mm.

8. Streifen nach Anspruch 1, wobei sich die Abzugskraft zur Reißlast wie 1 : 1,5 bis 1 : 5 verhalten.

9. Streifen nach Anspruch 1, wobei die Rohstoff-Mischung heiß geknetet und extrudiert ist.

10. Verwendung eines Streifens nach Anspruch 1 zum rückstandsfrei wiederlösbaren Verkleben eines Hakens oder eines anderen Gegenstandes, bei dem ggf. der Anfasser durch eine abnehmbare Blende oder dergleichen optisch abgedeckt ist.

## Claims

1. Strip of an adhesive film for a bond which can be redetached without residue, based on thermoplastic rubber and tackifying resins, the adhesive film possessing high elasticity and low plasticity and the adhesion being less than the cohesion, the adhesion disappearing when the film is extended, the ratio of pulling force to tearing load being at least 1 : 1.5, and an adhesive bond produced therewith being able to be separated by pulling on the adhesive film in the direction of the bonding plane, one end of the strip being provided on both sides with a covering which is abhesive on the side facing the adhesive film and which serves at the same time as a grip tab for pulling.

2. Strip according to Claim 1, the covering being a release-coated film or a release-coated paper.

3. Strip according to Claim 1, the release force of the covering film being less than 3 N/cm.

4. Strip according to Claim 1, the covering being UV-impermeable.

5. Strip according to Claim 1, in which the composition is formulated to be self-adhesive.

6. Strip according to Claim 1, the composition comprising antioxidants, UV stabilizers, colorants, fillers and/or other conventional auxiliaries.

7. Strip according to Claim 1, having a thickness from 0.2 mm to 1.2 mm.

8. Strip according to Claim 1, the ratio of pulling force to tearing load being from 1 : 1.5 to 1 : 5.

9. Strip according to Claim 1, the mixture of raw materials being kneaded hot and extruded.

10. Use of a strip according to Claim 1, for the redetachable bonding, without leaving a residue, of a hook or other article, in which the grip tab is covered optically if desired by a removable cover or the like.

## Revendications

1. Ruban d'un film adhésif pour réaliser un collage détachable sans laisser de résidus, à base de caoutchouc thermoplastique et de résines adhésives, le film adhésif présentant une élasticité élevée et une faible plasticité et l'adhérence étant plus faible que la cohésion, la capacité d'adhérence disparaissant lors de l'allongement du film, le rapport de la force de traction sur la force de rupture étant au moins de 1:1,5 et une liaison par collage réalisée au moyen de celui-ci pouvant être détachée par traction sur le film adhésif dans la direction du plan de collage, une extrémité du ruban étant revêtue des deux côtés d'un revêtement, qui est adhésif du côté du film adhésif et sert en même temps de bande de traction.

2. Ruban suivant la revendication 1, pour lequel le revêtement est un film revêtu de laque de séparation ou un papier revêtu de laque de séparation.

3. Ruban suivant la revendication 1, pour lequel la force de séparation du film de revêtement est inférieure à 3 N/cm.

4. Ruban suivant la revendication 1, pour lequel le revêtement est imperméable aux rayonnements UV.

5. Ruban suivant la revendication 1, dans lequel la masse est rendue autocollante.

6. Ruban suivant la revendication 1, dont la masse contient des antioxydants, des stabilisateurs UV, des colorants, des matières de charge et/ou d'autres agents auxiliaires habituels.

7. Ruban suivant la revendication 1, d'une épaisseur de 0,2 mm à 1,2 mm.

8. Ruban suivant la revendication 1, pour lequel le rapport entre la force de traction et la force de rupture est de 1:1,5 à 1:5.

9. Ruban suivant la revendication 1, pour lequel le mélange de matières premières est malaxé à chaud et extrudé.

10. Utilisation d'un ruban suivant la revendication 1 pour le collage détachable sans laisser de résidus d'un crochet ou d'un autre objet, pour lequel le cas échéant la bande de traction est revêtue d'un cache amovible ou est camouflée optiquement par un moyen similaire.
